Europäisches Patentamt

European Patent Office

Office européen des brevets

(11) Veröffentlichungsnummer: **0 263 364**
**A1**

(12) **EUROPÄISCHE PATENTANMELDUNG**

(21) Anmeldenummer: 87113981.2

(22) Anmeldetag: 24.09.87

(51) Int. Cl.⁴: **F16B 12/12**

(30) Priorität: 07.10.86 DE 3634161

(43) Veröffentlichungstag der Anmeldung:
**13.04.88 Patentblatt 88/15**

(84) Benannte Vertragsstaaten:
**AT GB IT**

(71) Anmelder: **Arturo Salice S.p.A.**
**Via Provinciale Novedratese 10**
**I-22060 Novedrate (Como)(IT)**

(72) Erfinder: **Der Erfinder hat auf seine Nennung**
**verzichtet**

(74) Vertreter: **Gossel, Hans K., Dipl.-Ing. et al**
**Rechtsanwälte E. Lorenz - B. Seidler M.**
**Seidler - Dipl.-Ing. H.K. Gossel Dr. I. Phillpps**
**- Dr. P.B. Schäuble Dr. S. Jackermeier -**
**Dipl.-Ing. A. Zinnecker**
**Widenmayerstrasse 23 D-8000 München**
**22(DE)**

(54) **Beschlag zum Verbinden zweier Möbelteile.**

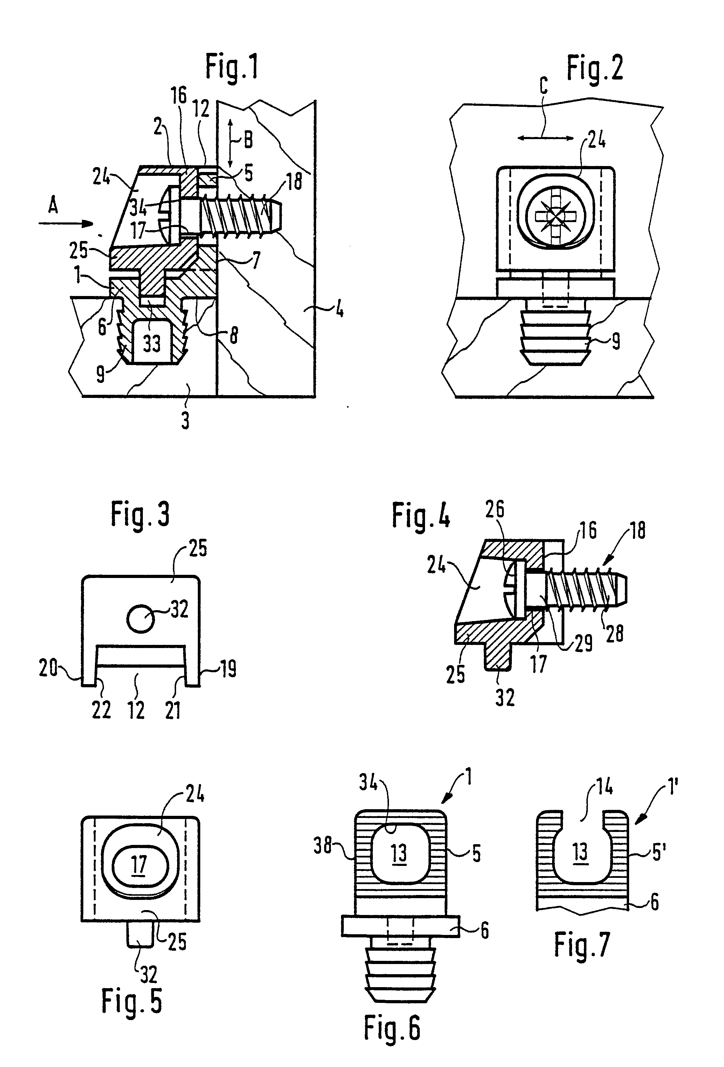

(57) Ein Beschlag zum Verbinden zweier rechtwinkelig zueinander angeordneter Möbelteile (3, 4) weist zwei winkelig zueinander stehende Anlageflächen für die mit einander zu verbindenden Möbelteile auf, von denen eine durch einen Dübel (9) mit der Gegenfläche des Möbelteils (3) verbunden und die andere durch eine Befestigungsschraube (18) mit der Gegenfläche des anderen Möbelteils (4) verspannt ist. Um den Verbindungsbeschlag auch durch ungeschulte Personen einfach und schnell montieren zu können und um eine Verstellung zum Ausgleich von Fertigungstoleranzen und sonstigen Ungenauigkeiten zu ermöglichen, ist der Beschlagteil (1) Teil eines zweiteiligen Beschlages und mit einer in eine Aussparung (12) des anderen Beschlagteils (2) einschiebbaren Zunge (5) versehen, die in diesem in ihrer mit veränderbarer Tiefe eingeschobenen Stellung mit dem anderen Möbelteil (4) durch die Befestigungsschraube (18) verspannt ist (Fig. 1).

Fig.1

## Beschlag zum Verbinden zweier Möbelteile

Die Erfindung betrifft einen Beschlag zum Verbinden zweier winkelig, vorzugsweise rechtwinkelig, zueinander angeordneter Möbelteile mit zwei winkelig zueinander stehenden Anlageflächen für die miteinander zu verbindenden Möbelteile, von denen eine durch eine Befestigungseinrichtung, vorzugsweise einen Dübel, mit der Gegenfläche des einen Möbelteils verbunden und die andere durch eine Befestigungsschraube mit der Gegenfläche des anderen Möbelteils verspannt ist.

Ein aus der DE-GMS 69 17 522 bekannter Beschlag dieser Art dient der Befestigung vorzugsweise von Zwischenböden an mit Lochreihen versehenen Möbelseitenwänden, wobei die Befestigungsschraube durch einen Dübel in einem Loch der Lochreihe gehalten und zum Umstecken des Dübels in ein anderes Loch der Lochreihe zur Veränderung der Höhenlage des Zwischenbodens lösbar ist.

In letzter Zeit hat sich zunehmend ein großer Markt für unmontierte Möbel entwickelt, deren Einzelteile in Kartons o.dgl. verpackt verkauft werden. Diese sogenannten Mitnahmemöbel werden von dem Käufer zuhause selbst anhand von Montageanleitungen montiert. Da die Möbel üblicherweise von ungeschulten Käufern montiert werden, besteht ein Bedürfnis nach leichter, einfacher und schneller Montierbarkeit der Möbel, wobei zusätzlich auch eine Einstellbarkeit und Ausrichtbarkeit der einzelnen Möbelteile zueinander gegeben sein soll, weil aufgrund der unvermeidbaren Herstellungstoleranzen die einzelnen Möbelteile nicht genau passend zueinander ausgerichtet werden können.

Der aus der DE-GMS 69 17 522 bekannte Möbelbeschlag ermöglicht zwar die Montage eines Zwischenbodens o.dgl. in unterschiedlicher Höhe, gestattet aber keine Einstellung oder Verstellung der miteinander verbundenen Möbelteile zum Ausgleich von Fertigungstoleranzen.

Aufgabe der Erfindung ist es daher, einen Verbindungsbeschlag der eingangs angegebenen Art zu schaffen, der sich auch von ungeschulten Personen einfach und schnell montieren läßt und eine Verstellung zum Ausgleich von Fertigungstoleranzen und sonstigen Ungenauigkeiten ermöglicht.

Erfindungsgemäß wird diese Aufgabe bei einem Verbindungsbeschlag der gattungsgemäßen Art dadurch gelöst, daß der Beschlag Teil eines zweiteiligen Beschlages ist und mit einer in eine Aussparung des anderen Beschlagteils einschiebbaren Zunge o. dgl. versehen ist, die in diesem oder durch diesen in ihrer mit veränderbarer Tiefe eingeschobenen Stellung mit dem anderen Möbelteil durch die Befestigungsschraube verspannt ist. Der erfindungsgemäße Verbindungsbeschlag trägt dem Umstand Rechnung, daß es sich bei von Käufern selbst zu montierenden sogenannten Mitnahmemöbeln um industrielle Massenprodukte handelt, die mit üblicherweise großen Fertigungstoleranzen hergestellt werden, so daß neben einer einfachen Montierbarkeit auch eine einfache Einstellbarkeit gegeben sein muß, um Ungenauigkeiten ausgleichen und die Möbel funktionsfähig in ansehnlicher Weise montieren zu können. Das erste Beschlagteil ist zweckmäßigerweise mit einer aus einem Dübel bestehenden Befestigungseinrichtung versehen, so daß sich dieser in einfacher Weise durch Einschlagen oder Eindrücken in ein vorgebohrtes Loch des einen Möbelteils befestigen läßt. Der zweite Beschlagteil kann durch die Befestigungsschraube mit oder ohne Dübel in eine Bohrung des anderen Möbelteils befestigt werden, wobei bei gelockerter Befestigungsschraube eine Einstellbarkeit durch unterschiedlich tiefes Einschieben der Zunge in dieses zweite Beschlagteil gegeben ist und nach entsprechender Einstellung eine Verspannung und Festlegung durch übliches Festziehen nur einer Befestigungsschraube erfolgt.

Zweckmäßigerweise besteht der zweite Beschlagteil aus einem plattenförmigen Teil, das auf seiner der Gegenfläche des anderen Möbelteils zugewandten Seite mit zwei seitlichen zwischen sich einen nutförmigen Einschubkanal für die Zunge, der die Aussparung bildet, begrenzenden Stegen versehen ist. Die die Einstellung ermöglichende Zunge des ersten Beschlagteils wird in einer der gewünschten Montagestellung entsprechenden Weise in den Einschubkanal eingeschoben und anschließend durch Anziehen der Befestigungsschraube in dieser Stellung fixiert.

Um ein gutes Festklemmen der Zunge zwischen dem zweiten Beschlagteil und der Möbelwandung zu gewährleisten, ist die Höhe der Stege zweckmäßigerweise niedriger als die Dicke der Zunge. Zusätzlich können die einander zugewandten Flächen der Zunge und des plattenförmigen Teils mit Riefen oder einer Riffelung versehen sein, die den Reibschluß vergrößern.

Weiterhin können die Flanken der Stege in Richtung auf die Gegenfläche des anderen Möbelteils keilförmig divergierend ausgebildet sein, so daß die mit ihren Seitenflächen ganz oder teilweise an den Flanken anliegende Zunge durch Festziehen der Befestigungsschraube zusätzlich verspannt wird. Die Seitenflächen der Zunge können etwa komplementär zu den Flanken abgeschrägt sein.

Die Zunge kann mit einem längsverlaufenden Langloch versehen sein, wobei die in eine Bohrung des plattenförmigen Teils eingeschraubte Befestigungsschraube die Zunge in dem Langloch durchsetzt. Die beiden Beschlagteile lassen sich bei dieser Ausgestaltung entsprechend der Länge des Langloches in axialer Richtung der Zunge relativ zueinander verstellen.

Nach einer bevorzugten Ausführungsform ist vorgesehen, daß die Bohrung des plattenförmigen Teils aus einem quer zu dem durch die Stege gebildeten Einschubkanal verlaufenden Langloch besteht und die Zunge statt mit einem Langloch mit einer fensterartigen Aussparung versehen ist. Diese Ausgestaltung des erfindungsgemäßen Verbindungsbeschlages ermöglicht zusätzlich eine Einstellung in Querrichtung zu der Zunge, als in zwei rechtwinkelig zueinanderstehenden Richtungen.

Nach einer weiteren bevorzugten Ausführungsform ist vorgesehen, daß das zweite Beschlagteil mit einem zu der Mittellinie der Zunge parallelen Zapfen in eine Führungsbohrung für diesen in den zweiten Beschlagteil greift. Durch diese Zapfenverbindung sind die beiden Beschlagteile zusätzlich miteinander verbunden und relativ zueinander fixiert.

Eine einfache Montierbarkeit ist insbesondere dann gewährleistet, wenn der Verbindungsbeschlag mit einer vormontierten Befestigungsschraube versehen ist. Nach einer erfinderischen Ausgestaltung ist daher vorgesehen, daß der Zapfen sich bei Anschlag der vormontierten Befestigungsschraube an dem äußeren Rand des Langloches oder der fensterartigen Aussparung noch in der Führungsbohrung befindet. Diese Ausgestaltung vereinfacht die Montage nicht nur dadurch, daß eine vormontierte Schraube vorgesehen ist, sondern zusätzlich auch deshalb, weil die beiden den Verbindungsbeschlag bildenden Beschlagteile nicht auseinanderfallen können. Infolge der Vormontage der Befestigungsschraube läßt sich der Verbindungsbeschlag besonders einfach und mit einfachen Werkzeugen montieren, ohne daß größere Anforderungen an die Geschicklichkeit der montierenden Person gestellt werden.

In weiterer Ausgestaltung der Erfindung ist vorgesehen, daß das Langloch oder die fensterartige Aussparung in der Zunge zum freien Ende der Zunge hin offen auslaufen. Diese Ausgestaltung ermöglicht es, die beiden Beschlagteile vor ihrem Zusammenfügen getrennt zu montieren und anschließend zu ihrer Montage zusammenzustecken.

Nach einer erfinderischen Ausgestaltung, für die selbständiger Schutz beansprucht wird, ist vorgesehen, daß das plattenförmige Teil mit einer oberen trichterartigen Aussparung für den Kopf der Befestigungsschraube versehen ist und daß der bodenseitige Durchmesser der Aussparung kleiner ist als der Durchmesser des Kopfes der Befestigungsschraube, so daß die vormontierte Befestigungsschraube klemmend im Grund der trichterförmigen Aussparung gehalten ist. Diese Ausgestaltung ermöglicht auf einfache Weise eine Halterung der Befestigungsschraube in ihrer vormontierten Stellung.

Nach einer weiteren erfinderischen Ausgestaltung, für die eben falls selbständiger Schutz beansprucht wird, ist vorgesehen, daß die Befestigungsschraube zwischen Kopf und Gewindeteil mit einem zylindrischen gewindelosen Schaftteil versehen ist, dessen Durchmesser etwa dem Durchmesser des Gewindeteils entspricht, daß der Durchmesser der Bohrung in dem plattenförmigen Teil größer ist als der zylindrische Schaftteil und daß sich die vormontierte Befestigungsschraube mit einem Randbereich ihres Kopfes auf einem abgeschrägten Teil der Wandung der Aussparung zur versenkten Aufnahme des Kopfes oder der trichterförmigen Ausnehmung und mit dem gegenüberliegenden Bereich des zylindrischen Schaftteils in der Bohrung reibschlüssig abstützt.

Die den Verbindungsbeschlag bildenden Beschlagteile bestehen zweckmäßigerweise aus Kunststoffspritzgußteilen. Sie können selbstverständlich auch aus Druckgußteilen aus Metall, vorzugsweise Zink, bestehen.

Ausführungsbeispiele der Erfindung werden nachstehend anhand der Zeichnung näher erläutert. In dieser zeigt

Fig. 1 einen Längsschnitt durch den zweiteiligen Verbindungsbeschlag in seinem montierten Zustand,

Fig. 2 eine Draufsicht auf den Verbindungsbeschlag in Richtung des Pfeils A in Fig. 1,

Fig. 3 eine Vorderansicht des zweiten Beschlagteils,

Fig. 4 einen Längsschnitt durch das zweite Beschlagteil,

Fig. 5 eine Draufsicht auf das zweite Beschlagteil,

Fig. 6 eine Draufsicht auf das erste Beschlagteil und

Fig. 7 eine der Fig. 6 entsprechende Draufsicht auf das erste Beschlagteil in anderer Ausführungsform.

Der Verbindungsbeschlag besteht aus dem ersten Beschlagteil 1 und dem zweiten Beschlagteil 2, die in der aus Fig. 1 ersichtlichen Weise ineinander geschoben. mit den rechwinkelig zueinander stehenden plattenförmigen Möbelteilen 3, 4 verbunden und miteinander verspannt sind.

Der Beschlagteil 1 besteht im wesentlichen aus einem winkeligen Element mit den rechtwinkelig zueinanderstehenden Schenkeln 5, 6. Die Schenkel 5, 6 sind auf ihren Außenseiten mit ebenen Anlageflächen 7, 8 versehen, mit denen sie an den entsprechenden Gegenflächen der Möbelteile 3, 4 anliegen. Der Schenkel 6 des Beschlagteils 1 ist im mittleren Bereich seiner Anlagefläche 8 mit einem dübelartigen Fortsatz 9 versehen, der zur Befestigung des Beschlagteils 1 an dem Möbelteil 3 in eine in diesem vorgesehene vorgebohrte Bohrung eingeschlagen ist. Zur besseren Verankerung an der Innenwandung der Bohrung ist der dübelartige Fortsatz 9 mit ringförmigen Nuten mit sägezahnförmigem Profil versehen.

Der Schenkel 5 des Beschlagteils 1 bildet einen zungenförmigen Fortsatz, der in eine entsprechende kanalförmige Aussparung 12 des zweiten Beschlagteils 2 eingeschoben ist. Der zungenförmige Schenkel 5 weist in seinem mittleren Bereich eine fensterartige Aussparung 13 auf. Nach der Ausführungsform gemäß Fig. 7 ist der zungenartige Schenkel 5' an seinem äußeren Ende mit einer die fensterartige Aussparung 13 nach außen him öffnenden Ausnehmung 14 versehen.

Der zweite Beschlagteil 2 besteht im wesentlichen aus einem plattenförmigen Teil 16, das mit einer Durchgangsbohrung 17 für die Befestigungsschraube 18 versehen ist. Auf ihrer Unterseite ist das plattenförmige Teil 16 des zweiten Beschlagteils 2 mit seitlichen Stegen 19, 20 versehen, die zwischen sich den nutförmigen Kanal 12 begrenzen. Die seitlichen Flanken 21, 22 der Stege 19, 20 sind in der aus Fig. 3 ersichtlichen Weise leicht abgeschrägt.

Die Durchgangsbohrung 17 in dem plattenförmigen Teil 16 des zweiten Verbindungsbeschlages ist in der aus Fig. 5 ersichtlichen Weise als querliegendes Langloch ausgebildet.

Das plattenförmige Teil 16 ist an seiner Vorderseite mit einem aufragenden Schenkel 25 versehen, der Teil einer trichterförmigen Wandung ist, die eine trichterförmige Aussparung 24 zur versenkten Aufnahme des Schraubenkopfes 26 bildet.

Bei der Ausführungsform nach Fig. 4 ist der Schraubenkopf 26 klemmend in dem sich trichterförmig verengenden Grund der Aussparung 24 gehalten.

Die Befestigungsschraube 18 ist zwischen ihrem mit einem selbstschneidenden Gewinde versehenen Schraftteil 28 und dem Schraubenkopf 26 mit einem zylindrischen gewindelosen Schaftabschnitt 29 versehen, dessen Länge etwa der Dicke des plattenförmigen Teils 16 entspricht. Der Durchmesser dieses zylindrischen Abschnitts 29 entspricht etwa dem Durchmesser des mit dem Gewinde versehe nen Schaftteils 28, kann aber in seinem Durchmesser auch kleiner sein als dieser.

Die Breite der Bohrung 17 ist größer als der Durchmesser des zylindrischen Schaftteils 29. Bei dem Ausführungsbeispiel nach Fig. 1 stützt sich der innere Rand des Kopfes der Befestigungsschraube 18 an der angrenzenden Wandung des aufragenden Schenkels 25 ab. Der gegenüberliegende Bereich des zylindrischen Schaftteils 29 stützt sich an dem gegenüberliegenden Rand der Bohrung 17 an, so daß die vormontierte Schraube 18 reibschlüssig in dem Beschlagteil 2 gehalten ist.

Die Vorderseite des aufragenden Schenkels 25 ist mit einem zapfenartigen Fortsatz 32 versehen, die in einer diesem angepaßten Bohrung 33 in dem Schenkel 6 des Beschlagteils 1 geführt ist.

In der aus Fig. 1 ersichtlichen vormontierten Stellung des Verbindungsbeschlages stößt die Befestigungsschraube 18 an dem hinteren Rand 34 der fensterartigen Aussparung 13 an, bevor der Zapfen 32 aus der Bohrung 33 herauskommt. so daß die Verbindungsbeschlagteile 1 und 2 in der vormontierten Stellung nicht auseinanderfallen können.

Der zungenartige Schenkel 5 ist in die kanalartige Aussparung 12 des zweiten Beschlagteils 2 in der aus Fig. 1 ersichtlichen Weise eingeschoben. Da die Höhe der Stege 21, 22 kleiner ist als die Dicke der schenkelartigen Zungen 5, 5' wird die Zunge in der kanalartigen Aussparung 12 durch Anziehen der Befestigungsschraube 18 festgeklemmt. Um den Reibschluß zwischen der Zunge 5, 5' und dem zweiten Beschlagteil 2 zu erhöhen, können die Zunge auf ihrer Oberseite und der plattenartige Teil 6 auf seiner Unterseite mit Riffelungen 38 versehen sein.

Ist die fensterartige Aussparung 13 des zungenartigen Schenkels 5' in der aus Fig. 7 mit einer diese öffnenden Aussparung 14 versehen, lassen sich die Beschlagteile 1, 2 getrennt montieren und der zungenartige Schenkel 5' nach dieser Montage in die Aussparung 12 einschieben, wobei der Schaft der Befestigungsschraube 18 sodann durch die Aussparung 14 hindurch in die fensterartige Aussparung 13 gelangt.

Vor dem Festziehen der Befestigungsschraube 18 lassen sich die beiden Beschlagteile 1 und 2 sodann in Richtung des Pfeils B in Fig. 1 relativ zueinander zur Einstellung der Möbelteile 3, 4 verschieben.

Da die Befestigungsschraube 18 durch ein Langloch 17 des plattenförmigen Teils 16 des Beschlagteils 2 greift, lassen sich die Beschlagteile auch quer zur Längsmittellinie des zungenförmigen Teils 5 in Richtung des Doppelpfeils C zur Ausrichtung und Einstellung der Möbelteile 3, 4 verschieben.

**Ansprüche**

1. Beschlag zum Verbinden zweier winkelig, vorzugsweise rechtwinkelig, zueinander angeordneter Möbelteile mit zwei winkelig zueinanderstehenden Anlageflächen für die miteinander zu verbindenden Möbelteile, von denen eine durch eine Befestigungseinrichtung, vorzugsweise einen Dübel, mit der Gegenfläche des einen Möbelteils verbunden und die andere durch eine Befestigungsschraube mit der Gegenfläche des anderen Möbelteils verspannt ist, **dadurch gekennzeichnet,** daß der Beschlagteil (1) Teil eines zweiteiligen Beschlages ist und mit einer in eine Aussparung (12) des anderen Beschlag teils (2) einschiebbaren Zunge (5, 5') o.dgl. versehen ist, die in diesem oder durch diesen in ihrer mit veränderbarer Tiefe eingeschobenen Stellung mit dem anderen Möbelteil (4) durch die Befestigungsschraube (18) verspannt ist.

2. Beschlag nach Anspruch 1, **dadurch gekennzeichnet,** daß der zweite Beschlagteil (2) aus einem plattenförmigen Teil (16) besteht, das auf seiner der Gegenfläche des anderen Möbelteils (4) zugewandten Seite mit zwei seitlichen, zwischen sich einen nutförmigen Einschubkanal (12) für die Zunge (5, 5'), der die Aussparung bildet, begrenzenden Stegen (19, 20) versehen ist.

3. Beschlag nach Anspruch 1 oder 2, **dadurch gekennzeichnet,** daß die Höhe der Stege (19, 20) niedriger als die Dicke der Zunge (5, 5') ist.

4. Beschlag nach einem der Ansprüche 1 bis 3, **dadurch gekennzeichnet,** daß die einander zugewandten Flächen der Zunge (5, 5') und des plattenförmigen Teils (16) mit Riefen oder einer Riffelung (38) versehen sind.

5. Beschlag nach einem der Ansprüche 1 bis 4, **dadurch gekennzeichnet,** daß die Flanken (21, 22) der Stege (19, 20) in Richtung auf die Gegenfläche des Möbelteils (3) keilförmig divergierend ausgebildet sind.

6. Beschlag nach einem der Ansprüche 1 bis 5, **dadurch gekennzeichnet,** daß die Seitenflächen der Zungen (5, 5') etwa komplementär zu den Flanken (21, 22) abgeschrägt sind.

7. Beschlag nach einem der Ansprüche 1 bis 6, **dadurch gekennzeichnet,** daß die Stege (19, 20) und die Seitenfläche der Zunge (5, 5') parallel zueinander verlaufen.

8. Beschlag nach einem der Ansprüche 1 bis 7, **dadurch gekennzeichnet,** daß die Zunge (5) mit einem längsverlaufenden Langloch versehen ist und die in eine Bohrung (17) des plattenförmigen Teils (16) eingeschraubte Befestigungsschraube (18) die Zunge (5) in dem Langloch durchsetzt.

9. Beschlag nach einem der Ansprüche 1 bis 8, **dadurch gekennzeichnet,** daß die Bohrung des plattenförmigen Teils (16) des zweiten Beschlagteils (2) aus einem quer zu dem durch die Stege (19, 20) gebildeten Einschubkanal (12) verlaufenden Langloch (17) besteht und die Zunge (5) statt mit einem Langloch mit einer fensterartigen Aussparung (13) versehen ist.

10. Beschlag nach einem der Ansprüche 1 bis 9, **dadurch gekennzeichnet,** daß das zweite Beschlagteil (2) mit einem zu der Mittellinie der Zunge (5, 5') parallelen Zapfen (32) in eine Führungsbohrung (33) für diesen in dem ersten Beschlagteil (1) greift.

11. Beschlag nach einem der Ansprüche 1 bis 10, **dadurch gekennzeichnet,** daß der Zapfen (32) sich bei Anschlag der vormontierten Befestigungsschraube (18) an dem äußeren Rand (34) des Langloches oder der fensterartigen Aussparung (13) noch in der Führungsbohrung (33) befindet.

12. Beschlag nach einem der Ansprüche 1 bis 11, **dadurch gekennzeichnet,** daß das Langloch oder die fensterartige Aussparung (13) in der Zunge (5') zum freien Ende der Zunge hin offen auslaufen.

13. Beschlag, insbesondere nach einem der Ansprüche 1 bis 12, **dadurch gekennzeichnet,** daß das plattenförmige Teil mit einer oberen trichterartigen Aussparung (24) für den Kopf (26) der Befestigungsschraube (18) versehen ist und daß der bodenseitige Durchmesser der Aussparung (24) kleiner ist als der Durchmesser des Kopfes (26) der Befestigungsschraube, so daß die vormontierte Befestigungsschraube (18) klemmend in dem Grund der trichterförmigen Aussparung (24) gehalten ist.

14. Beschlag, insbesondere nach einem der Ansprüche 1 bis 13, **dadurch gekennzeichnet,** daß die Befestigungsschraube (18) zwischen Kopf (26) und Gewindeteil (28) mit einem zylindrischen gewindelosen Schaftteil (29) versehen ist, dessen Durchmesser etwa dem Durchmesser des Gewindeteils entspricht, daß der Durchmesser der Bohrung (17) in dem plattenförmigen Teil (16) größer ist als der zylindrische Schaftteil (29) und daß die vormontierte Befestigungsfschraube (18) mit einem Randbereich ihres Kopfes (26) auf einem abgeschrägten Teil der Wandung (25) der Aussparung zur versenkten Aufnahme des Kopfes oder der trichterförmigen Ausnehmung (24) und mit dem gegenüberliegenden Bereich des zylindrischen Schaftteils in der Bohrung (17) reibschlüssig abstützt.

15. Beschlag nach einem der Ansprüche 1 bis 14, **dadurch gekennzeichnet,** daß die Beschlagteile (1, 2) aus Kunststoffspritzgußteilen bestehen.

0 263 364

Fig.1

Fig.2

Fig.3

Fig.4

Fig.5

Fig.6

Fig.7

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl.3) |
|---|---|---|---|
| A | DE-U-8 233 857  (R. HEINZE)<br>* Figur 5 *<br>--- | 1 | F 16 B  12/12 |
| A | DE-U-8 513 663  (LEHMANN)<br>* Figur 2 *<br>--- | 1 | |
| A | FR-A-1 258 486  (CUSSENEERS)<br>* Figur 5 *<br>--- | 1 | |
| A | FR-A-1 521 449  (ETABLISSEMENTS RODDE)<br>* Figur 1 *<br>--- | 1 | |
| A | LU-A-  40 884  (DEKONINCK et al.)<br>* Figur 1 *<br>--- | 1,2,5 | |
| A,D | DE-U-6 917 522  (P. HETTICH)<br>----- | | |

**RECHERCHIERTE SACHGEBIETE (Int. Cl.3)**

F 16 B  12/00

Der vorliegende Recherchenbericht wurde für alle Patentansprüche erstellt

| Recherchenort | Abschlußdatum der Recherche | Prüfer |
|---|---|---|
| BERLIN | 11-11-1987 | ZAPP E |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angefzhrtes Dokument
......................
& : Mitglied der gleichen Patentfamilie, übereinstimmendes Dokument

FPO FORM 1503 03.82 (P0403)